# FASCICULE DE BREVET EUROPEEN

(11) **EP 1 362 229 B1**
(45) Date de publication et mention de la délivrance du brevet: **06.04.2011**
(21) Numéro de dépôt: 02704814.9
(22) Date de dépôt: 13.02.2002
(51) Int. Cl.: G01L 27/00, G01H 3/00

(54) **DISPOSITIF DE CALIBRAGE D'UN CAPTEUR DE PRESSION, NOTAMMENT D'UN CAPTEUR DE PRESSION INFRASONORE**
VERFAHREN ZUR KALIBRIERUNG EINES DRUCKWANDLERS, INSBESONDERE EINES INFRASCHALL-DRUCKWANDLERS
DEVICE FOR CALIBRATING A PRESSURE SENSOR, IN PARTICULAR AN INFRASOUND PRESSURE SENSOR

(30) Priorité: 15.02.2001 FR 0102063
(43) Date de publication de la demande: 19.11.2003
(73) Titulaire: Commissariat à l'Énergie Atomique et aux Énergies Alternatives, 75015 Paris (FR)
(72) Inventeur: ALCOVERRO, Benoît, F-33700 Mérignac (FR); LAURENT, Jérôme, F-91370 VERRIERES LE BUISSON (FR)
(74) Mandataire: Poulin, Gérard
(86) Numéro de dépôt international: PCT/FR2002/000544
(87) Numéro de publication internationale: WO 2002/065082

(56) Documents cités:
- US-A- 3 281 543
- US-A- 3 744 294
- US-A- 4 189 936
- US-A- 4 698 997
- US-A- 4 748 598
- US-A- 5 567 863

## Description

### DOMAINE TECHNIQUE

La présente invention concerne un dispositif de calibrage d'un capteur de pression.

L'invention s'applique particulièrement au calibrage d'un capteur de pression infrasonore, c'est-à-dire au calibrage d'un capteur de pression qui est destiné à la mesure d'ondes infrasonores.

L'invention s'applique plus particulièrement au calibrage d'un capteur de pression destiné à la mesure d'ondes infrasonores dont les fréquences sont comprises dans l'intervalle allant de 0,001 Hz à 100 Hz.

### ETAT DE LA TECHNIQUE ANTERIEURE

Le calibrage d'un capteur de pression est nécessaire pour s'assurer de la validité des mesures effectuées avec un tel capteur.

On sait que le calibrage d'un capteur de pression absolue se fait par application d'une pression statique connue à ce capteur, au moyen d'une pompe, et que l'on mesure la valeur de cette pression par l'intermédiaire d'un manomètre de précision qui est relié au capteur. Un tel manomètre est commercialement disponible par exemple auprès de la société Keller.

Une telle technique permet de connaître uniquement la sensibilité du capteur de pression avec une précision acceptable ; elle ne permet pas de vérifier la réponse, en amplitude et en phase, du capteur.

De plus, cette technique est inutilisable dans le cas d'un capteur de pression différentielle, capteur qui ne mesure pas les pressions statiques.

On utilise alors, d'une manière générale, des moyens de génération d'une pression sinusoïdale dont la fréquence se situe dans la bande passante estimée du capteur. On fait communiquer ce dernier avec une enceinte fermée et l'on comprime l'air contenu dans cette enceinte au moyen d'un piston qui est animé d'un mouvement alternatif par l'intermédiaire de moyens électromécaniques.

L'amplitude de la pression ainsi engendrée n'est pas aussi précise que l'amplitude de la pression statique engendrée en vue du calibrage d'un capteur de pression absolue car la sensibilité aux variations de pression atmosphérique et aux variations de température n'est plus négligeable pour des fréquences inférieures à 1 Hz.

De plus, il est très difficile de connaître précisément le rapport du volume déplacé par le piston au volume de l'ensemble formé par le dispositif de calibrage et le capteur au repos.

Il est donc difficile de connaître précisément la pression appliquée.

En outre, les masses des éléments mécaniques en mouvement sont susceptibles de limiter, dans le domaine des hautes fréquences, la bande passante de ce genre de dispositif de calibrage.

Les techniques que l'on vient de rappeler ne permettent pas de caractériser complètement, avec la précision requise, un capteur de pression infrasonore.

### EXPOSÉ DE L'INVENTION

Un but de la présente l'invention est de remédier aux inconvénients précédents et de proposer un dispositif de calibrage qui soit valable tant pour un capteur de pression absolue que pour un capteur de pression différentielle.

L'invention vise en particulier à vérifier la réponse dynamique d'un capteur de pression (absolue ou différentielle), ce capteur étant destiné à la mesure des ondes infrasonores en mesurant la fonction de transfert de ce capteur dans une gamme de fréquence allant de 0,001 Hz à 100 Hz.

US 4698997 décrit un dispositif à pression oscillante pour la calibration dynamique de transducteurs de pression ; US 3744294 décrit un système de calibration à transducteur acoustique ; US 4748598 décrit un procédé pour calibrer des instruments acoustiques ; et US 4189936 décrit un générateur de pression.

De façon précise, la présente invention a pour objet un dispositif de calibrage d'un capteur de pression, conformément à la revendication 1.

Le dispositif objet de l'invention peut être prévu pour le calibrage d'un capteur de pression absolue ou pour le calibrage d'un capteur de pression différentielle.

Ce capteur est par exemple destiné à la mesure d'ondes infrasonores. Dans ce cas, la gamme de fréquence prédéfinie va, de préférence, de 0,001 Hz à 100 Hz.

De préférence la membrane est rigide ou rigidifiée.

En outre, cette membrane est, de préférence, rendue étanche.

Selon un mode de réalisation préféré de l'invention, les moyens de commande comprennent :
- une source de tension de référence, cette source étant réglable,
- des moyens d'amplification et d'inversion-amplification de la tension fournie par cette source, et
- des moyen de commutation de la tension ainsi amplifiée et de la tension ainsi inversée et amplifiée, ces moyens de commutation étant destinés à appliquer le signal électrique du genre pseudo-aléatoire au moteur électrodynamique.

De préférence, ces moyens de commande comprennent en outre :
- un microphone prévu pour détecter les variations de pression dans la première enceinte,
- des moyens de redressement, de filtrage et de conversion analogique-numérique des signaux électriques fournis par le microphone, et
- un microcontrôleur prévu pour commander la source de tension de référence et les moyens de commutation en fonction des signaux ainsi filtrés, redressés et convertis sous forme numérique.

### BRÈVE DESCRIPTION DES DESSINS

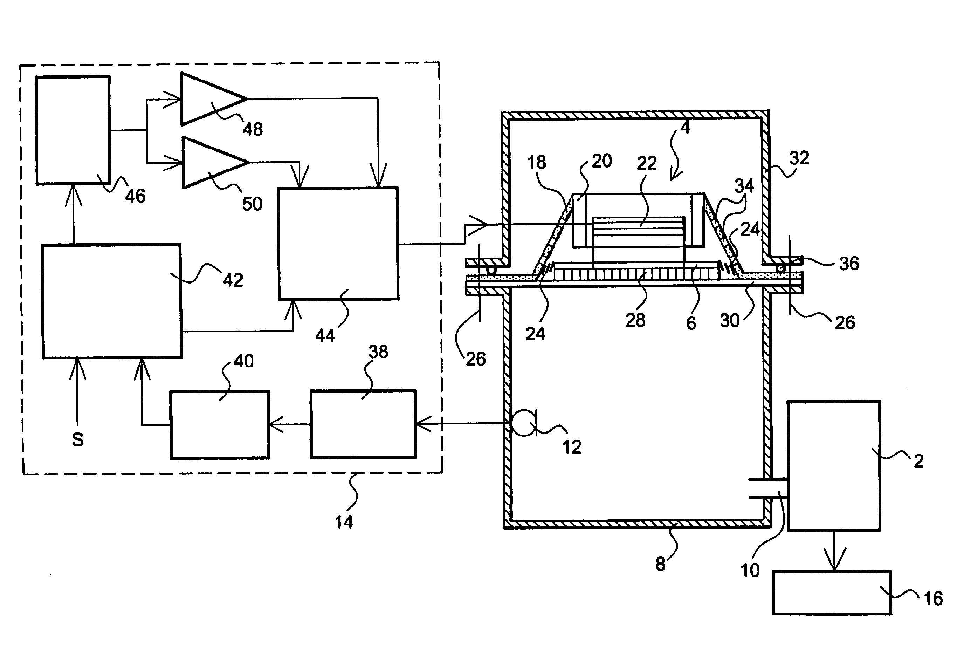

La présente invention sera mieux comprise à la lecture de la description d'exemples de réalisation donnés ci-après, à titre purement et nullement limitatif, en faisant référence à la figure unique annexée qui est une vue schématique d'un mode de réalisation particulier du dispositif objet de l'invention.

### EXPOSÉ DÉTAILLÉ DE MODES DE RÉALISATION PARTICULIERS

Le dispositif conforme à l'invention, qui est schématiquement représenté sur la figure unique annexée, est destiné à calibrer un capteur de pression (absolue ou différentielle) 2. Ce capteur est destiné à la mesure d'ondes infrasonores dans la bande de fréquence allant de 0,001 Hz à 100 Hz.

Il convient de noter que le capteur 2 peut avoir une bande passante plus étroite que la bande de fréquence, ou bande de mesure, mentionnée ci-dessus mais, dans l'exemple considéré, on mesure ce capteur sur cette bande de fréquence.

Le dispositif conforme à l'invention, qui est représenté sur la figure, comprend des moyens de mesure comportant un moteur électrodynamique 4 et une membrane légère et rigide 6 qui est destinée à être mise en mouvement par ce moteur électrodynamique, ce dernier se trouvant en regard de la face arrière de la membrane 6.

Le dispositif comprend aussi une enceinte 8, ou enceinte avant, qui est obturée par l'intermédiaire de la face avant de la membrane 6.

Le capteur de pression 2, que l'on veut calibrer, communique par l'intermédiaire d'un tuyau 10 avec cette enceinte avant 8.

Le dispositif comprend en outre un microphone calibré 12 qui est fixé dans cette enceinte avant, contre une paroi de cette dernière, et des moyens de commande 14, prévus pour commander le moteur électrodynamique 4 en fonction de signaux électriques fournis par le microphone 12.

On voit aussi sur la figure des moyens 16 de traitement des signaux fournis par le capteur de pression 2.

Pour mesurer la fonction de transfert de ce capteur dans la bande de fréquence mentionnée plus haut, on applique au capteur 2 une pression de référence dont toutes les composantes spectrales, qui couvrent cette bande de fréquence, sont excitées simultanément, avec une même amplitude et une phase nulle, ou un retard constant, les unes par rapport aux autres.

Il convient de noter qu'en déplaçant la membrane légère et rigide 6, le moteur électrodynamique comprime le volume clos délimité par l'enceinte avant 8 et par les circuits acoustiques du capteur de pression 2, ces circuits acoustiques formant l'impédance acoustique d'entrée du capteur 2.

La nature de l'excitation appliquée au moteur électrodynamique 4 est un signal électrique de type pseudo-aléatoire, dont l'amplitude est connue et qui est déclenché de façon synchrone (c'est-à-dire que l'on connaît l'instant auquel on démarre la séquence pseudo-aléatoire, mentionnée plus loin, par rapport à la mesure effectuée par les moyens 16 de façon à ne commettre aucune erreur sur la mesure de la phase du capteur 2).

Ce moteur électrodynamique 4 est un haut-parleur du commerce comprenant une armature 18, un aimant 20, une bobine mobile 22 et la membrane 6 qui est rendue solidaire de cette bobine mobile.

Ce haut-parleur comprend aussi un moyen 24 de suspension périphérique de la membrane 6, permettant de suspendre cette dernière à la partie périphérique de l'armature 18 du haut-parleur. Cette partie périphérique de l'armature 18 est fixée sur un bord de l'enceinte avant 8, comme on le voit sur la figure, de sorte que la face avant de la membrane 6 obture cette enceinte avant, cette face avant se trouvant en regard de la cavité délimitée par l'enceinte avant 8.

Pour limiter les non-linéarités lorsque la pression est forte, la membrane 6 est rigidifiée par un élément en nid d'abeilles 28, par exemple en forme de disque, qui est collé à la face avant de la membrane 6.

De plus, afin de pouvoir engendrer de très basses fréquences, la membrane 6 est rendue étanche. Pour ce faire, on utilise une membrane de caoutchouc 30 par exemple en forme de disque, qui est collée sur le disque en nid d'abeilles 28.

Ce disque de caoutchouc 30 recouvre la partie périphérique de l'armature 18 dans l'exemple représenté. Ce disque 30 est donc compris entre le haut-parleur 4 et le bord correspondant de l'enceinte avant 8 et assure l'étanchéité de la fixation du haut-parleur 4 sur ce bord correspondant de l'enceinte avant 8.

Dans un exemple non représenté de l'invention, le disque de caoutchouc 30 n'est pas utilisé et cette étanchéité est assurée par un joint torique.

Le disque en nid d'abeilles 28 est fait d'un matériau composite. A la place de ce disque en nid d'abeilles, on peut par exemple utiliser une structure en caissons qui est faite de titane.

Il est préférable que la cavité avant 8 ait un volume suffisant, que l'on peut déterminer par analyse de la charge acoustique apportée par le capteur de pression, pour assurer l'insensibilité de la pression de référence vis-à-vis de cette charge acoustique.

De plus, pour diminuer la sensibilité des mesures aux variations de pression atmosphérique, il est préférable d'utiliser une autre enceinte 32 formant une enceinte arrière, qui est fermée par l'intermédiaire de la face arrière de la membrane 6.

Si le haut-parleur était pourvu d'un capot, ce capot constituerait l'enceinte arrière. Cependant, comme c'est généralement le cas pour les hauts-parleurs du commerce, l'armature 18 comporte des ouvertures 34 et l'on ajoute alors au dispositif l'enceinte arrière 32. La membrane se trouve ainsi comprise entre cette dernière et l'enceinte 8.

Comme on le voit, la partie périphérique de l'armature 18 du haut-parleur est fixée sur un bord de l'enceinte arrière 32 et l'étanchéité de la liaison entre la partie périphérique de l'armature 18 et l'enceinte arrière 32 est assurée par un joint torique 36.

Le volume délimité par l'enceinte arrière 32 (dans laquelle on a placé le moteur électrodynamique) assure aussi le contrôle de la linéarité de la réponse en amplitude et en phase dans les hautes fréquences.

La compliance acoustique de l'enceinte arrière 32 permet de réduire la compliance acoustique apparente de la membrane 6 et augmente ainsi sa fréquence de résonance à masse mobile constante.

On utilise un tuyau 10 ayant une longueur aussi petite que possible pour connecter le capteur de pression 2 au dispositif de calibrage et pour repousser au-delà de la bande de fréquence les éventuelles perturbations induites par le couplage entre le capteur 2 et le dispositif de calibrage.

Le circuit acoustique résonant formé par le tuyau 10 et par l'intérieur du capteur de pression 2 est à l'origine de ces perturbations.

Il convient de noter que plus la compliance acoustique de l'enceinte arrière 32 est faible, plus on réduit la compliance acoustique apparente de la membrane 6 et plus on augmente la fréquence de résonance.

Les moyens de commande 14, qui font partie du dispositif schématiquement représenté sur la figure, comprennent :
- des moyens 38 de redressement et de filtrage passe-bas des signaux électriques fournis par le microphone 12,
- un convertisseur analogique-numérique 40 qui convertit les signaux analogiques fournis par ces moyens de filtrage et de redressement 38 en signaux numériques,
- un microcontrôleur 42 qui reçoit en entrée les signaux numériques fournis par ce convertisseur analogique-numérique 40 ainsi qu'un signal S, qui est par exemple émis par une horloge GPS, ce signal S étant un signal de démarrage d'une séquence pseudo-aléatoire sur laquelle on reviendra par la suite, cette séquence étant aussi mesurée par le capteur 2 et reçue par les moyens 16, et
- un commutateur de puissance 44 qui reçoit en entrée des signaux de commande fournis par le microcontrôleur 42,
- une source 46 de tension de référence réglable qui est commandée par le microcontrôleur 42 et qui fournit une tension de référence sous forme analogique, un convertisseur numérique-analogique étant incorporé à la source 46,
- un amplificateur de puissance 48 qui amplifie cette tension de référence, et
- un inverseur-amplificateur de puissance 50 qui inverse la tension de référence et amplifie la tension ainsi inversée.

La tension de référence amplifiée et la tension de référence inversée et amplifiée alimentent la bobine 22 du haut-parleur 4 par l'intermédiaire du commutateur de puissance 44 commandé par le microcontrôleur 42.

La valeur de la pression de référence dépend de la tension de référence modulée par le signal pseudo-aléatoire engendré par le microcontrôleur 42. Cette pression de référence peut donc être ajustée à la valeur souhaitée en modifiant la tension de référence et donc en modifiant le signal pseudo-aléatoire fourni par le microcontrôleur 42.

Avant chaque calibrage, on applique au haut-parleur 4 un signal d'amplitude et de fréquence connues par l'intermédiaire du commutateur de puissance 44.

Le microphone calibré 12 mesure ce signal dans la partie haute de la bande de fréquence utile, cette partie haute allant, par exemple, d'environ 3 Hz à environ 50 Hz.

Après redressement et filtrage passe-bas, la tension de mesure fournie par le microphone 12 est l'image de la pression engendrée, à un coefficient constant près.

Le microcontrôleur ajuste alors, en fonction de la tension redressée, filtrée et numérisée la tension de référence utilisée pour engendrer le signal électrique envoyé à la bobine 22 et obtenir ainsi la pression souhaitée, en tenant donc compte de la mesure faite par l'intermédiaire du microphone 12.

Pour obtenir la précision souhaitée, plusieurs séquences de mesure de la pression de référence peuvent être envoyées consécutivement avant l'envoi, par le microcontrôleur 42, de la séquence pseudo-aléatoire de mesure à la source de tension de référence 46.

On apporte les précisions suivantes sur le dispositif conforme à l'invention, représenté sur la figure :
- l'excitation simultanée de toutes les composantes spectrales couvrant l'intervalle [0,001 Hz ; 100 Hz] résulte du signal pseudo-aléatoire,
- la même amplitude d'excitation pour toutes ces composantes résulte de l'étanchéité de l'enceinte avant 8 et de la faible valeur du volume de l'enceinte arrière 32,
- le déphasage nul de ces composantes les unes par rapport aux autres lors de leur excitation résulte de la faible valeur de la compliance apparente, du moyen de suspension 24 associé à l'enceinte arrière 32,

- le caractère pseudo-aléatoire du signal électrique appliqué au moteur électrodynamique résulte de l'utilisation de séquences pseudo-aléatoires pour commander le commutateur 44, et
- l'amplitude de ce signal est connue parce qu'elle est fixée par la tension de référence 46.

On apporte également des précisions sur la fonction du commutateur de puissance :

Ce dernier reçoit simultanément une tension +V de l'amplificateur 48 et la tension -V de l'inverseur-amplificateur 50. Comme il reçoit une valeur numérique de la part du microcontrôleur, cela lui permet de fournir une tension analogique proportionnelle à cette valeur numérique.

A titre purement indicatif et nullement limitatif, on donne maintenant un exemple de calibrage d'un capteur infrason. Il s'agit du capteur de pression absolue MB2000 conçu au Commissariat à l'Energie Atomique et commercialisé par la société Tekelek.
- Pour mesurer la réponse dynamique de ce capteur infrason, on utilise un haut-parleur de 30 cm de diamètre et d'une élongation linéaire de ±5 mm. Les enceintes sont réalisées avec des tôles d'acier inoxydable soudées, l'étanchéité entre les enceintes et le haut-parleur étant assurée par la membrane de caoutchouc 30 et le joint torique 36 comme on l'a vu. Le volume de l'enceinte avant vaut 30 dm³ et le volume de l'enceinte arrière vaut 2 dm³.
- Le capteur infrason MB2000 comporte quatre évents de prise d'air de 45 mm de long. Pendant le calibrage, trois de ces évents sont bouchés et le quatrième, qui constitue alors le tuyau 10 (de 45 mm de long dans cet exemple), est inséré de façon étanche dans l'enceinte avant du dispositif de calibrage.
- Les tensions de référence, qui parviennent au commutateur de puissance, ne dépassent pas, respectivement, +50 V et -50 V. Cela permet d'engendrer des pressions qui peuvent aller jusqu'à 10 hPa avec une réponse linéaire en fréquence allant de 0,001 Hz jusqu'à 80 Hz et une phase qui ne varie pas de plus de 3°.
- La séquence de test de la pression de référence se fait avec un signal carré dont la fréquence est égale à 10 Hz.
- La mesure de la pression de référence pendant la phase de test est faite avec le microphone commercialisé par la société B&K sous la référence 4189, dont le signal est filtré passe-bas à 50 Hz. La précision sur la mesure de la pression engendrée est de l'ordre de quelques pourcents.

L'invention n'est pas limitée au calibrage dans la bande de fréquence [0,001 Hz ; 100 Hz]. Elle s'applique aussi à d'autres bandes de fréquence, par exemple de 0,001 Hz à 500 Hz.

De plus, l'invention n'est pas limitée au calibrage d'un capteur de pression infrasonore. Elle s'applique aussi au calibrage d'hydrophones.

En outre, l'invention n'est pas limitée au calibrage d'un capteur de pression absolue. Elle s'applique au calibrage de tout capteur de pression, en particulier au calibrage d'un capteur de pression différentielle, par exemple un microphone.

## Revendications

1. Dispositif de calibrage d'un capteur de pression (2), en particulier un capteur de pression absolue ou un capteur de pression différentielle, et notamment pour la mesure d'ondes infrasonores, ce dispositif comprenant des moyens de mesure (4, 6, 8, 14) prévus pour appliquer à ce capteur une pression de référence qui varie en fonction du temps et dont toutes les composantes spectrales couvrant une gamme de fréquences prédéfinie sont excitées simultanément avec une même amplitude et un déphasage nul, ou un retard constant, les unes par rapport aux autres, dans lequel les moyens de mesure comprennent :
- une première enceinte (8) destinée à être reliée au capteur de pression,
- une membrane (6) ayant des première et deuxième faces, la première enceinte étant obturée par l'intermédiaire de la première face,
- un moteur électrodynamique (4) destiné à déplacer la membrane pour engendrer la pression de référence dans la première enceinte, et
- des moyens de commande (14) destinés à appliquer au moteur électrodynamique un signal électrique du genre pseudo-aléatoire, dont l'amplitude est connue et qui est déclenché de façon synchrone,
le dispositif comprenant en outre une deuxième enceinte (32) qui est obturée par l'intermédiaire de la deuxième face de la membrane.

2. Dispositif selon la revendication 1, dans lequel le capteur est destiné à la mesure d'ondes infrasonores et la gamme de fréquences prédéfinie va de 0,001 Hz à 100 Hz.

3. Dispositif selon l'une quelconque des revendications 1 et 2 dans lequel la membrane (6) est rigide ou rigidifiée.

4. Dispositif selon l'une quelconque des revendications 1 et 2 dans lequel la membrane (6) est en outre rendue étanche.

5. Dispositif selon l'une quelconque des revendications 1 à 4, dans lequel les moyens de commande (14) comprennent :
- une source de tension de référence (46), cette source étant réglable,
- des moyens (48, 50) d'amplification et d'inversion-amplification de la tension fournie par cette source, et
- des moyens (44) de commutation de la tension ainsi amplifiée et de la tension ainsi inversée et amplifiée, ces moyens de commutation étant destinés à appliquer le signal électrique du genre pseudo-aléatoire au moteur électrodynamique.

6. Dispositif selon la revendication 5, dans lequel les moyens de commande (14) comprennent en outre :
- un microphone (12) prévu pour détecter les variations de pression dans la première enceinte,
- des moyens (38, 40) de redressement, de filtrage et de conversion analogique-numérique des signaux électriques fournis par le microphone, et
- un microcontrôleur (42) prévu pour commander la source de tension de référence et les moyens de commutation en fonction des signaux ainsi filtrés, redressés et convertis sous forme numérique.

## Claims

1. Device for calibrating a pressure detector (2), in particular an absolute pressure detector or a differential pressure detector, and in particular for the measurement of infrasonic waves, this device including measurement means (4, 6, 8, 14) provided to apply to this detector a reference pressure which varies depending on time and all of whose spectrum components covering a predetermined frequency range are excited simultaneously with one and the same amplitude and a zero phase shift, or a constant delay, relative to each other, wherein the measurement means include:
- a first enclosure (8) intended to be connected to the pressure detector,
- a membrane (6) having first and second surfaces, the first enclosure being sealed by means of the first surface,
- an electro-dynamic motor (4) intended to displace the membrane so as to generate the reference pressure in the first enclosure, and
- control means (14) intended to apply to the electro-dynamic motor an electrical signal of the pseudo-random type, the amplitude of which is known and which is triggered synchronously, the device additionally including a second closure (32) which is sealed by the second surface of the membrane.

2. Device according to claim 1, wherein the detector is intended for the measurement of infrasonic waves and the predetermined frequency range is from 0.001 Hz to 100 Hz.

3. Device according to anyone of claims 1 and 2, wherein the membrane (6) is rigid or rigidified.

4. Device according to any one of claims 1 and 2, wherein the membrane (6) is additionally made impermeable.

5. Device according to any one of claims 1 to 4, wherein the control means (14) include:
- a reference voltage source (46), this source being adjustable,
- means (48, 50) for the amplification and inversion-amplification of the voltage supplied by this source, and
- means (44) of switching the voltage so amplified and the voltage so inverted and amplified, these switching means being intended to apply the pseudo-random electrical signal to the electro-dynamic motor.

6. Device according to claim 5, wherein the control means (14) additionally include:
- a microphone (12) provided to detect variations in pressure in the first enclosure,
- means (38, 40) for the rectification, filtering and analogue-to-digital conversion of the electrical signals supplied by the microphone, and
- a micro-controller (42) provided to control the reference voltage source and the switching means as a function of the signals so filtered, rectified and converted to digital form.

## Patentansprüche

1. Vorrichtung zur Eichung eines Druckmessgeräts (2), insbesondere eines Messgeräts des absoluten Drucks oder eines Messgeräts eines Differentialdrucks und insbesondere zur Messung von Infraschallwellen, wobei diese Vorrichtung Messmittel (4, 6, 8, 14) zum Ausüben eines Referenzdrucks auf dieses Messgerät umfasst, wobei der Referenzdruck als Funktion der Zeit variiert und dessen gesamte Spektralkomponenten, die einen vorgegebenen Frequenzbereich überdecken, gleichzeitig mit der gleichen Amplitude und ohne eine Phasenverschiebung oder mit einer konstanten Verzögerung untereinander angelegt werden, wobei die Messmittel umfassen:
- eine erste Kammer (8), die mit dem Druckmessgerät zu verbinden ist,
- eine Membran (6), die eine erste und eine zweite Seite bzw. Fläche aufweist, wobei die erste Kammer durch die erste Seite verschlossen wird,
wobei die Vorrichtung ferner eine zweite Kammer (32) umfasst, die durch die zweite Seite der Membran verschlossen wird.

2. Vorrichtung nach Anspruch 1, wobei die Messvorrichtung zur Messung von Infraschallwellen dient und wobei der vorgegebene Frequenzbereich von 0,001 Hz bis 100 Hz reicht.

3. Vorrichtung nach einem der Ansprüche 1 und 2, wobei die Membran (6) steif oder gehärtet ist.

4. Vorrichtung nach einem der Ansprüche 1 und 2, wobei die Membran (6) dicht gemacht wurde.

5. Vorrichtung nach einem der Ansprüche 1 bis 4, wobei die Steuermittel (14) umfassen:
- eine Referenzspannungsquelle (46), wobei diese Quelle regelbar ist,
- Mittel (48, 50) zur Verstärkung und Inversion-Verstärkung der von dieser Quelle gelieferten Spannung und
- Mittel (44) zur Vermittlung der so verstärkten Spannung und der so invertierten und verstärkten Spannung, wobei diese Vermittlungsmittel das elektrische Signal des Pseudo-Zufallstyps an den elektrodynamischen Motor anlegen sollen.

6. Vorrichtung nach Anspruch 5, wobei die Steuermittel (14) ferner umfassend:
- ein Mikrofon (12), das zur Detektion der Druckveränderungen in der ersten Kammer bereitgestellt ist,
- Mittel (38, 40) zur Gleichrichtung, Filtration und Analog-Digital-Umwandlung der von dem Mikrofon gelieferten elektrischen Signale und
- eine Mikrosteuereinrichtung (42), die zur Steuerung der Referenzspannungsquelle und der Vermittlungsmittel als Funktion der so gefilterten, gleichgerichteten und in Digitalform umgewandelten Signale bereitgestellt ist.
